(19) Europäisches Patentamt
European Patent Office
Office européen des brevets

(11) **EP 2 235 221 B1**

(12) **EUROPÄISCHE PATENTSCHRIFT**

(45) Veröffentlichungstag und Bekanntmachung des Hinweises auf die Patenterteilung:
**06.09.2017 Patentblatt 2017/36**

(21) Anmeldenummer: **09706777.1**

(22) Anmeldetag: **12.01.2009**

(51) Int Cl.:
*C21C 5/52* *(2006.01)*　　　*F27B 3/28* *(2006.01)*
*F27D 19/00* *(2006.01)*　　*F27D 21/04* *(2006.01)*

(86) Internationale Anmeldenummer:
**PCT/EP2009/050241**

(87) Internationale Veröffentlichungsnummer:
**WO 2009/095292 (06.08.2009 Gazette 2009/32)**

(54) **VERFAHREN ZUM BETREIBEN EINES LICHTBOGENOFENS MIT WENIGSTENS EINER ELEKTRODE, REGEL- UND/ODER STEUERUNGSEINRICHTUNG, MASCHINENLESBARER PROGRAMMCODE, DATENTRÄGER UND LICHTBOGENOFEN ZUR DURCHFÜHRUNG DES VERFAHRENS**

METHOD FOR OPERATING AN ARC FURNACE COMPRISING AT LEAST ONE ELECTRODE, REGULATING AND/OR CONTROL DEVICE, MACHINE-READABLE PROGRAMME CODE, DATA CARRIER AND ARC FURNACE FOR CARRYING OUT SAID METHOD

PROCÉDÉ POUR FAIRE FONCTIONNER UN FOUR À ARC ÉLECTRIQUE COMPORTANT AU MOINS UNE ÉLECTRODE, DISPOSITIF DE RÉGULATION ET/OU DE COMMANDE, CODE DE PROGRAMME LISIBLE PAR MACHINE, SUPPORT DE DONNÉES ET FOUR À ARC ÉLECTRIQUE POUR LA MISE EN OEUVRE DU PROCÉDÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **31.01.2008 DE 102008006958**

(43) Veröffentlichungstag der Anmeldung:
**06.10.2010 Patentblatt 2010/40**

(73) Patentinhaber: **Primetals Technologies Germany GmbH**
**91052 Erlangen (DE)**

(72) Erfinder:
• **DÖBBELER, Arno**
**91074 Herzogenaurach (DE)**
• **KRÜGER, Klaus**
**22179 Hamburg (DE)**
• **MATSCHULLAT, Thomas**
**90542 Eckental (DE)**

• **RIEGER, Detlef**
**85598 Baldham (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
**DE-A1-102005 034 378　　DE-B3-102005 034 409**
**JP-A- 2008 115 408**

• **MATSCHULLAT AND RIEGER: "Foaming Slag and Scrap Metal Behaviour in Electric Arc Furnace - A New and Very Precise Detection Method with Automatic Carbon Control" ARCHIVES OF METALLURGY AND MATERIALS OF THE POLISH ACADEMY OF SCIENCES, Bd. 53, Nr. 2, März 2008 (2008-03), - Juni 2008 (2008-06) Seiten 399-403, XP002528409 Poland**

## Beschreibung

Verfahren zum Betreiben eines Lichtbogenofens mit wenigstens einer Elektrode, Regel- und/oder Steuerungseinrichtung, Maschinenlesbarer Programmcode, Datenträger und Lichtbogenofen zur Durchführung des Verfahrens

Die Erfindung betrifft ein Verfahren zum Betreiben eines Lichtbogenofens mit wenigstens einer Elektrode, wobei der dem Lichtbogen zugeführte Feststoff mittels eines von der wenigstens einen Elektrode ausgebildeten Lichtbogens geschmolzen wird. Ferner betrifft die Erfindung einen Lichtbogenofen, eine Regel- und/oder Steuerungseinrichtung, einen maschinenlesbaren Programmcode und einen Datenträger mit Programmcode zur Durchführung des Verfahrens.

Ein Lichtbogenofen dient der Herstellung von Flüssigmetall, in der Regel Stahl. Das Flüssigmetall wird aus festem Schmelzgut, etwa Schrott oder reduziertem Eisen, zusammen mit weiteren Zuschlagsstoffen, hergestellt. Hierzu wird zu Prozessbeginn der Lichtbogenofen mit Schrott und/oder reduziertem Eisen und ggf. weiteren Zuschlags- oder Legierungsstoffen beschickt und dann wenigstens ein Lichtbogen zwischen wenigstens einer Elektrode und dem festen Schmelzgut gezündet. Die durch den wenigstens einen Lichtbogen in den Lichtbogenofen eingebrachte Energie führt zum Aufschmelzen des festen Schmelzguts. Während des Schmelzprozesses können dem Lichtbogenofen in der Regel weiterhin Zuschlagsstoffe, wie Kohle oder Kalk, oder Legierungselemente zugeführt werden.

Der Schmelzprozess im Lichtbogenofen wird in der Regel begleitet durch akustische Phänomene, da sich das Schmelzgut im Inneren des Lichtbogenofens während des Schmelzprozesses bewegt. Diese können bspw. verursacht sein durch das Brennen des Lichtbogens, durch chemische Reaktionen oder auch durch Schrotteinstürze in unterschiedlichen Ausmaßen.

Insbesondere Schrotteinstürze beim Schmelzprozess sind problematisch, da diese - bei entsprechender großer bewegter Masse - zur Beschädigung bzw. zu einem Bruch einer Elektrode im Lichtbogenofen führen können.

Aus der Offenlegungsschrift DE 10 2005 034 378 A1 ist ein Verfahren zur Bestimmung einer Beschaffenheit des Inhalts eines Lichtbogenofens bekannt. Jedoch bleibt es unklar, wie ein derartiges Verfahren gemäß der Offenlegungsschrift funktionieren soll.

Aus der DE 10 2005 034 409 B3 ist ein Verfahren zur Bestimmung der Höhe der Schaumschlacke in einem Lichtbogenofen durch das Messen von Schwingungen am Lichtbogenofen zu entnehmen.

Aufgabe der vorliegenden Erfindung ist es, ein Verfahren bereitzustellen, mit welchem ein Lichtbogenofen sicherer betrieben werden kann. Ferner ist es Aufgabe der Erfindung einen zur Durchführung des Verfahrens geeigneten Lichtbogenofen anzugeben sowie eine das Verfahren veranlassende Regel- und/oder Steuereinrichtung, ein Speichermedium und einen Programmcode hierfür.

Der das Verfahren betreffende Teil der Aufgabe wird bei einem Verfahren der eingangs genannten Art dadurch gelöst, dass ein Maß für die Masse eines an einer Begrenzung des Lichtbogenofens festgesetzten Feststoffteils ermittelt wird, wobei zur Ermittlung des Maßes für die Masse des an der Begrenzung festgesetzten Feststoffteils ein für erzwungene Schwingungen anwendbares Modell verwendet wird und anhand des ermittelten Maßes eine Prozessgröße des Lichtbogenofens gesteuert und/oder geregelt wird. Unter Feststoffteil ist eine Teilmenge des in den Lichtbogen zugeführten Feststoffs zu verstehen. Ein Feststoffteil ist dann an der Begrenzung als festgesetzt anzusehen, wenn dieser zusammen mit einer schwingungsfähigen Begrenzung ein gekoppeltes schwingungsfähiges System bildet. Unter Prozessgröße wird jede Größe verstanden, welche Einfluss auf den im Lichtbogenofen ablaufenden Prozess nimmt. Es können eine oder mehrere, d.h. wenigstens eine, Prozessgrö-ße(n) mit dem ermittelten Maß gesteuert und/oder geregelt werden. Die Prozessgrößen sind in der Regel durch Stellgrößen einstellbar. Überschreitet das ermittelte Maß für die Masse des an der Begrenzung festgesetzten Feststoffteils oder eine daraus abgeleitete Größe einen festlegbaren Schwellwert, so kann vorgesehen werden, eine Prozessgröße, derart zu steuern und/oder zu regeln, dass eine Störung des planmäßig im Lichtbogenofen ablaufenden Prozesses verringert, insbesondere minimiert oder verhindert, wird.

Eine Steuerung und/oder Regelung einer Prozessgröße des Lichtbogenofens anhand des ermittelten Maßes bedeutet also, dass die Steuerung und/oder Regelung auf irgendeine Weise, mittelbar oder unmittelbar, auf Grundlage des ermittelten Ma-ßes geschieht. Erfolgt eine Steuerung und/oder Regelung auf Grundlage einer aus dem Maß abgeleiteten Größe, so erfolgt sie trotzdem mittelbar anhand des ermittelten Maßes.

Als Beispiel für eine einstellbare Prozessgröße im obigen Zusammenhang kann etwa die vertikale werden. Überschreitet bspw. das ermittelte Maß bzw. eine daraus abgeleitete Größe einen Schwellwert, so kann von einem baldigen Schrotteinsturz ausgegangen werden. Dieser kann zur Beschädigung der Elektroden führen. Um dies zu vermeiden wird anhand des ermittelten Maßes bzw. der daraus abgeleiteten Größe die Elektrodenposition bspw. derart gesteuert und/oder geregelt, dass die Gefahr einer Beschädigung der Elektrode, insbesondere eines Elektrodenbruchs, verringert wird. Dies kann erreicht werden, indem die Elektroden gesteuert bzw. geregelt in Abhängigkeit vom ermittelten Maß bzw. der daraus abgeleiteten Größe nach oben oder unten bewegt werden bzw. gezielt nicht beschädigend wirkende Schrotteinstürze herbeigeführt werden.

Als Erreger der erzwungenen Schwingung kann der pulsierende Lichtbogen angesehen werden. Ggf. können auch zusätzliche, insbesondere am Lichtbogenofen angeordnete Erregereinheiten verwendet werden, um eine erzwungene Schwingung eines Schwingungssystems zu erregen. Letztere Alternative der Erregung hat den Vorteil, dass die Erregerfrequenz im Gegensatz zum Lichtbogen beliebig und damit auf die jeweiligen Gegebenheiten individuell einstellbar ist. Das erregte Schwingungssystem ist eine schwingungsfähige Begrenzung des Lichtbogenofens mit einem daran festgesetzten Feststoffteil. Die Masse des an der Begrenzung festgesetzten Feststoffteils beeinflusst somit die Schwingung des Schwingungssystems. Durch die Verwendung eines derartigen Modells in Verbindung mit einer darauf basierenden Schwingungsanalyse von aus dem Betrieb des Lichtbogenofens stammenden Signalen, ist es möglich, auf einfache Art und Weise ein Maß für die Masse eines an der Begrenzung festgesetzten Feststoffteils zu bestimmen.

In der Ausführungsform der Erfindung umfasst die Ermittlung des Maßes für die Masse des an einer Begrenzung festgesetzten Feststoffteils folgende Verfahrensschritte:

- für die wenigstens eine Elektrode wird ein zugeführter Elektrodenstrom erfasst,
- Körperschall-Schwingungen der Begrenzung werden erfasst,
- aus dem erfassten Elektrodenstrom und den erfassten Körperschall-Schwingungen werden ein frequenzabhängiges Stromauswertesignal und ein frequenzabhängiges Schwingungsauswertesignal ermittelt,
- es wird jeweils eine Phasenverschiebung zwischen dem Stromauswertesignal und dem Schwingungsauswertesignal für eine Mehrzahl gemeinsamer Frequenzen ermittelt, und
- aus der ermittelten Phasenverschiebung wird das Maß für die Masse des an der Begrenzung festgesetzten Feststoffteils ermittelt. Dadurch wird eine besonders genaue Ermittlung des Maßes für die Masse des an einer Begrenzung festgesetzten Feststoffteils ermöglicht, anhand derer mittelbar oder unmittelbar eine Steuerung und/oder Regelung einer Prozessgröße des Lichtbogenofens erfolgen kann.

Als frequenzabhängige Stromauswertesignale können insbesondere folgende Größen oder daraus gebildete Größen verwendet werden:

$$I_n(\omega) \propto \int_a^b I(t)^n e^{-i\omega t} dt \qquad \text{oder} \qquad \text{als}$$

$$I_n(\omega) \propto \int_a^b \left| I(t) \right|^n e^{-i\omega t} dt \text{, mit n: Parameter, n}$$

$\in 1,2,3,...$ , mit i: imaginäre Einheit, mit e: Euler'sche Zahl, mit t: Zeit, mit $\omega$ : Kreisfrequenz des Elektrodenstroms, mit I(t): zeitabhängiger, erfasster Elektrodenstrom, mit I($\omega$): frequenzabhängiger Elektrodenstrom, mit a: Anfang des Integrationsintervalls, b: Ende des Integrationsintervalls. a kann bspw. als minus unendlich und b als plus unendlich gewählt werden. Alternativ können auch endliche Intervallgrenze gewählt werden. Die Verwendung der Fouriertransformation zur Überführung eines Signals vom Zeitraum in den Frequenzraum ist optional. Es kann auch jede andere dem Fachmann geeignet erscheinende Transformation verwendet werden, um die Signale vom Zeitraum in den Frequenzraum zu überführen. Vorzugsweise wird das Quadrat des Elektrodenstroms, d.h. n=2. oder der Betrag des Elektrodenstroms, d.h. n = 1 als Basis für die Ermittlung des frequenzabhängigen Stromauswertesignals verwendet.

Der die Regel und/oder Steuereinrichtung betreffende Teil der Aufgabe wird gelöst durch eine Regel- und/oder Steuereinrichtung für einen Lichtbogenofen, mit einem maschinenlesbaren Programmcode, welcher Steuerbefehle aufweist, die die Regel- und/oder Steuereinrichtung zur Durchführung eines Verfahrens nach Anspruch 1 veranlassen.

Der den maschinenlesbaren Programmcode betreffende Teil der Aufgabe wird gelöst durch einen maschinenlesbaren Programmcode für eine Regel- und/oder Steuereinrichtung für einen Lichtbogenofen, wobei der Programmcode Steuerbefehle aufweist, die die Regel- und/oder Steuereinrichtung zur Durchführung des Verfahrens nach Anspruch 1 veranlassen.

Der das Speichermedium betreffende Teil der Aufgabe wird gelöst durch ein Speichermedium mit einem darauf gespeicherten maschinenlesbaren Programmcode gemäß Anspruch 3.

Der den Lichtbogenofen betreffende Teil der Aufgabe wird gelöst durch einen Lichtbogenofen mit wenigstens einer Elektrode, mit einer Elektrodenstromerfassungseinrichtung zur Erfassung eines der wenigstens einen Elektrode zugeführten Elektrodenstroms, mit Körperschallsensoren zur Erfassung von Körperschall-Schwingungen einer Begrenzung des Lichtbogenofens, und mit einer Regel- und/oder Steuereinrichtung nach Anspruch 2, wobei die Elektrodenstromerfassungseinrichtung und die Körperschallsensoren mit der Regel und/oder Steuereinrichtung wirkverbunden sind.

Körperschallsensoren mit der Regel und/oder Steuereinrichtung wirkverbunden sind.

Weitere Vorteile der Erfindung ergeben sich aus dem Ausführungsbeispiel, welches anhand der schematischen Zeichnungen nachfolgend genauer erläutert wird. Es zeigen:

FIG 1      eine schematische Darstellung eines Lichtbogenofens zur Durchführung des erfindungsgemäßen Verfahrens

FIG 2      eine Darstellung eines erfassten Elektrodenstromsignals über die Zeit,

FIG 3      eine Darstellung eines erfassten Körperschallsignals über die Zeit,

FIG 4      eine Darstellung einer frequenzabhängigen Phasenverschiebung zwischen Stromauswertesignal und Schwingungsauswertesignal für gemeinsam Frequenzen,

FIG 5 eine Darstellung eines Maßes für die Masse des an einer Begrenzung des Lichtbogenofens festgesetzten Feststoffteils über die Zeit,

FIG 6 ein Flussdiagramm zur Darstellung des schematischen Ablaufs eines Verfahrens zur Ermittlung eines Massemaßes.

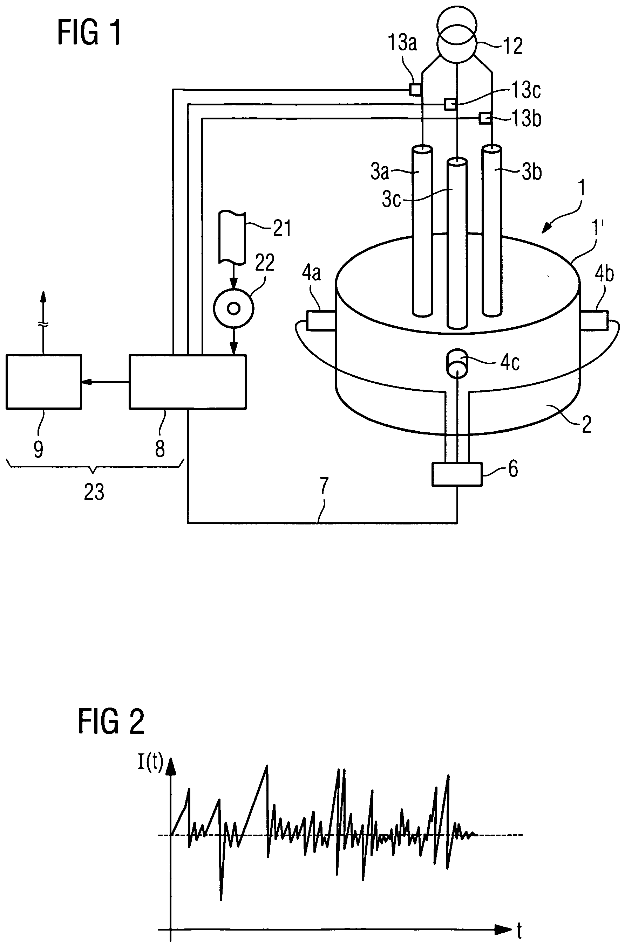

Figur 1 zeigt einen Elektrolichtbogenofen 1 mit mehreren Elektroden 3a, 3b, 3c, die über Stromzuführungen mit einer Stromversorgungseinrichtung 12 gekoppelt sind. Die Stromversorgungseinrichtung 12 weist vorzugsweise einen Ofentransformator auf.

Mit Hilfe von drei Elektroden 3a, 3b, 3c werden im Elektrolichtbogenofen 1 Beschickungsmaterialien, wie beispielsweise Stahl- und/oder Eisenschrott und/oder direktreduziertes Eisen, ggf. mit Legierungsmitteln und/oder Zusatzstoffen, aufgeschmolzen. Bisher ist nicht bekannt, anhand welcher Größe ein Einsturz von Schrott vorhergesagt werden kann. Folglich kann es passieren, dass eine oder mehrere Elektroden 3a, 3b und/oder 3c aus FIG 1 durch einen Schrotteinsturz beschädigt werden oder schlimmstenfalls sogar brechen. Eine Elektrodenbeschädigung oder ein Elektrodenbruch führt zu einer signifikanten Störung bis hin zum Abbruch des Schmelzprozesses und ist daher möglichst zu vermeiden. Dies kann durch das nachfolgend vorgestellte Verfahren verhindert werden.

Im gezeigten Beispiel sind an den Stromzuführungen der Elektroden 3a, 3b, 3c Elektrodenstromerfassungseinrichtungen 13a, 13b, 13c vorgesehen, mit Hilfe derer Strom und/oder Spannung bzw. die den Elektroden 3a, 3b, 3c zugeführte Energie gemessen werden können. Die Elektrodenstromerfassungseinrichtungen 13a, 13b, 13c sind mit einer Signalverarbeitungseinrichtung 8 wirkverbunden. D.h., es erfolgt eine kontaktlose oder auf Kontakt beruhende Übertragung von Signalen zwischen wenigstens einer Elektrodenstromerfassungseinrichtung 13a, 13b, 13c und der Signalverarbeitungseinrichtung 8. Die übermittelten Signale repräsentieren dabei den über die Zeit erfassten Elektrodenstrom. Die Übermittlung derartiger Signale erfolgt vorzugsweise kontinuierlich und für alle den Elektroden 3a, 3b, 3c zugeführten Elektrodenströme.

An einer Wand 2 bzw. an den Paneelen des Ofengefäßes 1', d.h. an der äußeren Begrenzung des Ofengefäßes 1', sind Körperschallsensoren 4a, 4b, 4c zur Erfassung von Schwingungen am Ofengefäß 1 angeordnet. Die Körperschallsensoren 4a, 4b, 4c können mittelbar und/oder unmittelbar mit dem Ofengefäß 1' bzw. mit der Wand 2 des Ofengefäßes 1' verbunden angeordnet sein. Die Körperschallsensoren 4a, 4b, 4c zur Messung von Körperschall-Schwingungen sind vorzugsweise an einer schwingfähigen Stelle der Wand 2 im Wesentlichen direkt gegenüber der jeweiligen Elektrode 3a, 3b, 3c angeordnet und es sind vorzugsweise mindestens so viele Körperschallsensoren 4a, 4b, 4c wie Elektroden 3a, 3b, 3c vorgesehen. Direkt gegenüber bedeutet, dass die Körperschallsensoren 4a, 4b, 4c auf der Wand 2 des Ofengefäßes 1' jeweils einen minimalen Abstand zu einer Mittengerade der jeweils nähesten Elektrode aufweisen.

Die Körperschallsensoren 4a, 4b, 4c sind mit einer Signalverarbeitungseinrichtung 8 wirkverbunden. D.h., es erfolgt eine kontaktlose oder auf Kontakt beruhende Übertragung von Signalen zwischen wenigstens einem Körperschallsensor 4a, 4b, 4c und der Signalverarbeitungseinrichtung 8. Die übermittelten Signale repräsentieren dabei die über die Zeit erfassten Körperschall-Schwingungen der Wand 2 des Ofengefäßes an der Stelle des Körperschallsensors 4a, 4b, 4c. Die Übermittlung derartiger Signale erfolgt vorzugsweise kontinuierlich.

Die Signale, die von den Köperschallsensoren 4a, 4b, 4c an die Signalverarbeitungseinrichtung 8 übermittelt werden, werden vorzugsweise zumindest teilweise über einen Lichtwellenleiter 7 geleitet. Zwischen dem Lichtwellenleiter 7 und den Körperschallsensoren 4, 4a, 4b, 4c ist mindestens eine optische Einrichtung 6 angeordnet, die zur Verstärkung und/oder Umsetzung von Signalen der ein oder mehreren Körperschallsensoren 4a, 4b, 4c dient. In der näheren Umgebung des Ofengefäßes 1' bzw. unter Umständen auch unmittelbar am Ofengefäß 1' können Signalleitungen vorgesehen sein, die Signale der Körperschallsensoren 4a, 4b, 4c leiten. Die Signalleitungen sind vorzugsweise vor Hitze, elektromagnetischen Feldern, mechanischer Belastung und/oder anderen Belastungen geschützt geführt.

In der Signalverarbeitungseinrichtung 8 wird das Maß für die Masse des an der Wand 2 festgesetzten Schrotts ermittelt. Das ermittelte Massemaß wird dann einer Regeleinrichtung 9 übermittelt, welche das Massemaß zur Einstellung einer Stellgröße für eine Prozessgröße des Elektrolichtbogenofens 1 verwendet. Im vorliegenden Ausführungsbeispiel bilden die Regeleinrichtung 9 und die Signalverarbeitungseinrichtung 8 die Steuereinrichtung 23.

Bspw. kann etwa die Elektrodenposition, insbesondere die vertikale, der Elektroden 3a, 3b, 3c mit Hilfe des Massemaßes derart geregelt werden, dass die Wahrscheinlichkeit eines E-lektrodenbruches gering ist und gleichzeitig ein effizienter Schmelzprozess stattfinden kann. Gegebenenfalls kann auch ein Rütteln des Ofengefäßes, vorzugsweise zusammen mit dem Herausziehen wenigstens einer der Elektroden 3a, 3b, 3c, erfolgen, sobald das Massemaß oder eine daraus abgeleitete Größe einen vorgebbaren Schwellwert überschreitet bzw. unterschreitet. Dies führt dazu, dass sich der an der Wand 2 des Ofengefäßes 1' festgesetzte Feststoffteil löst und gleichmäßiger im Ofengefäß 1' verteilt. Dadurch wird die Gefahr eines die Elektroden 3a, 3b, 3c gefährdenden Schrotteinsturzes verringert. Auch kann ggf. durch Zugabe von Medien in den Elektrolichtbogenofen 1 anhand des ermittelten Massemaßes eine Beeinflussung des Schmelzguts im Lichtbogenofen 1 derart erfolgen, dass die Gefahr eines Schrotteinsturzes verringert wird bzw. ein Schrotteinsturz derart gesteuert abläuft, dass die Elektroden nicht oder in verringertem Maße gefährdet werden.

Am Beispiel der Elektrode 3a des Elektrolichtbogenofens 1 wird die Ermittlung des Massemaßes beispielhaft in Verbindung mit FIG 1 erläutert. Vorzugsweise findet die Ermittlung eines Massemaßes kontinuierlich während des Betriebs des Elektrolichtbogenofens 1 und für alle Elektroden 3a, 3b und 3c statt. Der zeitlich erfasste Elektrodenstrom für eine Elektrode 3a, erfasst mit der Elektrodenstromerfassungseinrichtung 13a, ist in FIG 2 dargestellt.

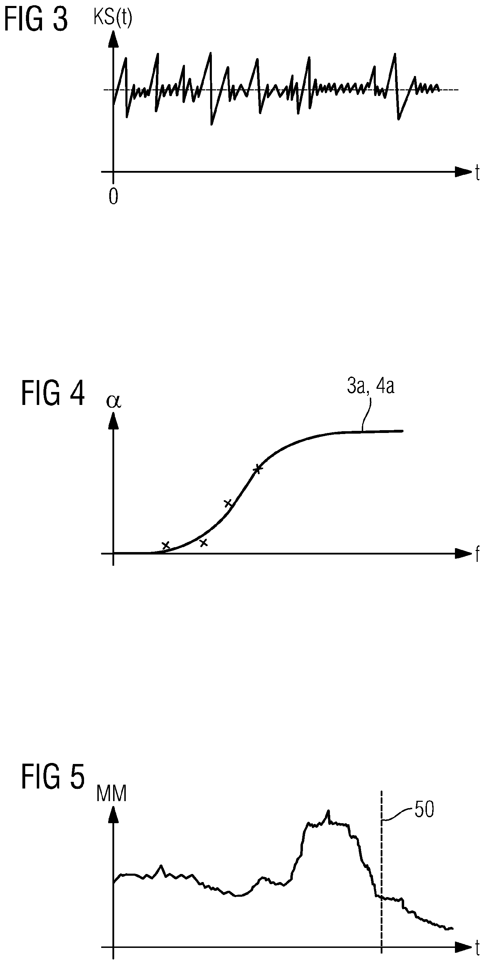

Der gemessene bzw. erfasste Elektrodenstrom wird digitalisiert, sofern die Daten noch nicht digitalisiert vorliegen. Dies geschieht mittels einer ausreichend hohen Samplingrate, bspw. von 12000 Samples pro Sekunde. Die Höhe der Samplingrate ist abhängig von den auftretenden zeitlichen Elektrodenstromänderungen: $dI(t)/dt$. Hierbei ist $I(t)$ das zeitlich veränderliche, dem Elektrodenstrom zugeordnete Elektrodenstromsignal und $t$ die Zeit. Je schneller sich der Elektrodenstrom über die Zeit ändert, desto höher ist in der Regel die Samplingrate zu wählen, um die Änderungen des Elektrodenstroms mit entsprechender Genauigkeit zu erfassen. Ggf. kann die Samplingrate abhängig von zu erwartenden Elektrodenstromänderungen eingestellt werden. Das Gesagte gilt analog für die erfassten Körperschall-Schwingungen der Wand 2 durch die Körperschallsensoren 4a, 4b, 4c. Es wird somit ein zeitlich aufgelöstes Körperschallschwingungssignal $KS(t)$ erfasst, welches beispielhaft in FIG 3 dargestellt ist.

Bevor die Signalverarbeitungseinrichtung 8 zur Auswertung des Verfahrens herangezogen wird, wird vorzugsweise einmalig das Verfahren in Form eines maschinenlesbaren Programmcodes 21 mittels eines Speichermediums 22, etwa einer Compact Disc, der Signalverarbeitungseinrichtung 8 zugeführt und auf der speicherprogrammierbaren Signalverarbeitungseinrichtung 8 hinterlegt. Damit ist die Signalverarbeitungseinrichtung 8 vorbereitet zur Durchführung eines Verfahrens zur Ermittlung eines Massemaßes in einem Elektrolichtbogenofen 1. Die Signalverarbeitungseinrichtung 8 ist mit der Regeleinrichtung 9 wirkverbunden. Die Regeleinrichtung 9 regelt die Stellgrößen zur Beeinflussung der Prozessgrößen für den im Lichtbogenofen 1 stattfindenden Schmelzprozess.

Die den Elektrodenstrom repräsentierenden Elektrodenstromsignale $I(t)$ werden der vorbereiteten Signalverarbeitungseinrichtung 8 zugeführt. In der Signalverarbeitungseinrichtung 8 wird das Elektrodenstromsignal $I(t)$ in das Quadrat des Elektrodenstromsignals $I^2(t)$ überführt und das quadrierte Elektrodenstromsignals $I^2(t)$ aus dem Zeitraum in den Frequenzraum transformiert, so dass ein nach Frequenzanteilen aufgeteiltes quadriertes Elektrodenstromsignal $I^2(f)$ erhalten wird, wobei $f$ eine Frequenz ist. Gleichbedeutend zu $I^2(f)$ kann $I^2(\omega)$ ermittelt werden, wobei $\omega = 2\pi f$ ist. Die Transformation des quadrierten Elektrodenstromsignals $I^2(t)$ vom Zeitraum in den Frequenzraum geschieht vorzugsweise mittels Fouriertransformation. Jedoch sind ggf. auch anderen Transformationsmethoden geeignet, um ein Signal aus einem Zeitraum in einen Frequenzraum zu überführen. Diese stehen dem Fachmann ebenfalls zur Verfügung. Alternativ kann auch der Betrag des zeitabhängigen Elektrodenstroms als Basis für die Transformation verwendet werden.

Für das erfasste Körperschallschwingungssignal $KS(t)$ wird ebenfalls eine Fouriertransformation durchgeführt und ein frequenzabhängiges Körperschallschwingungssignal erhalten. Vorzugsweise wird als Basis der Fouriertransformation vom Signal $KS^n(t)$ mit $n$ als Parameter ausgegangen. Vorteilhafterweise wird $n=1$ gewählt, so dass direkt das erfasste Signal verwendet werden kann. Es kann jedoch ggf. auch der Betrag der Körperschallschwingung in einer beliebigen Potenz $n$ zur Auswertung herangezogen werden.

Für die Fouriertransformierten des quadrierten Elektrodenstroms und des erfassten Körperschalls wird nun für gemeinsame Frequenzen, etwa für die ganzzahligen Oberschwingungen der doppelten Betriebsfrequenz $kf_0$, bspw. mit $k = 1, 2, 3$, d.h. 100Hz, 200Hz, 300Hz, des Elektrodenstromsignals und des Körperschallsignals jeweils eine Phasenverschiebung $\alpha$ ermittelt. Die Betriebsfrequenz ist die Frequenz, mit welcher eine Elektrode mit einer elektrische Größe, etwa der Spannung bzw. dem Elektrodenstrom, beaufschlagt wird. Die Phasenverschiebung $\alpha$ zwischen dem mittels der Elektrodenstromerfassungseinrichtung 13a erfassten Elektrodenstrom und den mittels des Körperschallsensors 4a erfasster Körperschall-Schwingungen ist für bestimmte Erregerfrequenzen $f$ in FIG 4 eingezeichnet. Ferner zeigt FIG 4 eine Fitfunktion, welche durch die punktuell eingezeichneten Phasenverschiebungen $\alpha$ gelegt wurde.

Die Fitfunktion beruht auf der aus dem Modell für erzwungene Schwingungen bekannten Gleichung, welche die bei erzwungenen Schwingungen auftretenden Phasenverschiebungen zwischen Erreger und Schwingungssystem beschreibt. Als Fit-Parameter wird hierbei $\omega_0^2 = K/m$ und eine Dämpfungskonstante verwendet, wobei $K$ eine Federkonstante ist und $m$ die Masse des durch den Erreger angeregten Schwingungssystems. Nach Abschluss des Fits kann somit $\omega_0^2$ als Maß für die an der Wand des Ofengefäßes festgesetzte Masse erhalten werden.

FIG 5 zeigt den zeitlichen Verlauf des Maßes MM für die Masse eines an einer Wand 2 eines Ofengefäßes 1' anliegende Feststoffteils. Hinsichtlich der Bezugszeichen von Vorrichtungen wird auf FIG 1 verwiesen. Das gezeigte Massemaß MM basiert auf den Daten der Elektrodenstromerfassungseinrichtung 13a und des der Elektrode 3a gegenüberliegenden Sensors 4a an der Wand 2 des Ofengefäßes 1'. Das Massemaß MM bewegt sich zu Beginn des dargstellten zeitlichen Verlaufs auf einem relativ konstanten Niveau.

Nach einer bestimmten Zeit, gegen Mitte des dargestellten Zeitintervalls, kommt es zu einem signifikanten Anstieg des Maßes MM für die Masse des an der Wand 2 des Ofengefäßes 1' festgesetzten Masse. Dies bedeutet, dass es zu einer Ansammlung von Feststoff an der Wand 2 in einem Bereich kommt, welcher Einfluss auf die durch den Körperschallsensor 4a erfasste Körperschallschwingungssignale nimmt. Nach einer gewissen Zeitdauer nimmt das Massemaß MM wieder ab. Dies kann daran liegen, dass sich der an der Ofenwand 2 festgesetzte Feststoffteil zu lösen beginnt. Das Schwingungssystem Wand - festgesetzter Feststoffteil wird also zunehmend entkoppelt. Es besteht nun somit die Gefahr, dass ein Schrotteinsturz oder ein Schrottrutsch bevorsteht.

Das Massemaß MM fällt nun mit zunehmender Zeit relativ stark ab. Eine betragsmäßig hohe negative Änderung des Massemaßes MM in kurzer Zeit, d.h ein betragsmäßig hohes, negatives d(MM)/dt, kann daher auf einen bevorstehenden Schrotteinsturz hindeuten.

Das Signal d(MM)/dt kann somit genutzt werden, um Schrotteinstürze vorherzusagen, und den Lichtbogenofen derart zu steuern bzw. regeln, dass Störungen des planmäßigen Betriebs des Lichtbogenofens, insbesondere die Gefährdung der Elektroden durch Elektrodenbruch aufgrund von Schrotteinstürzen, minimiert wird.

Zum Zeitpunkt 50, eingezeichnet in FIG 5, ist eine durch Bedienpersonal erkennbare Erschütterung des Lichtbogenofens wahrzunehmen, welche auf einen Schrotteinsturz zurückzuführen ist. Durch Vergleich konnte in der Praxis anhand der auftretenden Erschütterungen verifziert werden, dass das Massemaß MM tatsächlich geeignet ist, Schrotteinstürze vorherzusagen. Aufgrund des Abfalls des Massemaßes ist es somit möglich, die Elektrode 3a bzw. auch die anderen Elektroden 3b und 3c rechtzeitig mittels einer Ansteuerung der entsprechenden Stellmittel durch die Steuereinrichtung bzw. Regeleinrichtung derart zu positionieren, dass die Elektroden nicht oder geringer von einem Schrotteinsturz gefährdet werden unter Beachtung eines im Wesentlichen unveränderten Energieeintrags.

Das Massemaß MM wird vorzugsweise kontinuierlich ermittelt und zur Regelung bzw. Steuerung von Prozessgrößen des Lichtbogenofens eingesetzt. Dabei werden vorteilhafterweise alle verfügbaren Körperschallschwingungssignale und erfassten Elektrodenströme der jew. Elektrode verwendet. Insbesondere kurz nach Beginn des Schmelzprozesses, d.h. bei noch hohem Feststoffanteil des Schmelzguts im Lichtbogenofen, trägt das Verfahren zur Verbesserung des Betriebs des Ofens bei.

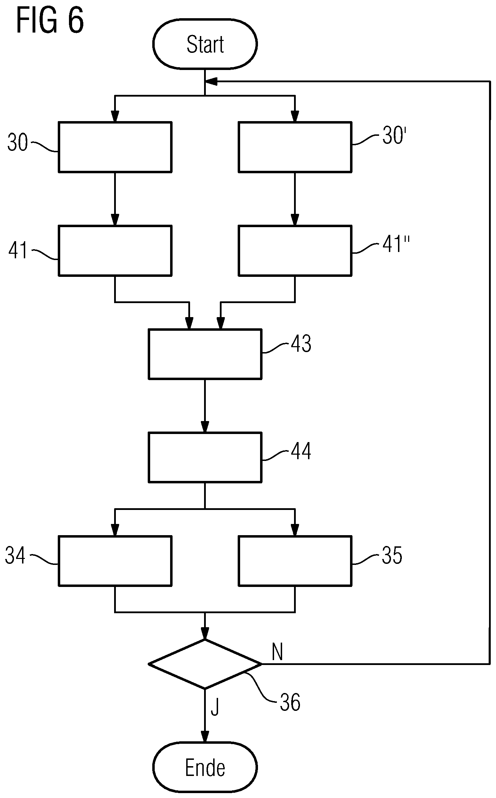

FIG 6 zeigt ein Flussdiagramm, welches einen beispielhaften Ablauf des Verfahrens darstellt. Es wird hierbei davon ausgegangen, dass der Lichtbogenofen in Betrieb ist und ein Lichtbogen zwischen Elektrode und Feststoff zum Einschmelzen des Feststoffs ausgebildet ist.

Zunächst wird in einem Verfahrensschritt 30 der Elektrodenstrom für jede Elektrode des Lichtbogenofens erfasst. Zeitgleich werden Körperschall-Schwingungen mittels Körperschallsensoren an einer Wand des Ofengefäßes in einem Verfahrensschritt 30' erfasst. Die Körperschall-Schwingungen der Wand des Ofengefäßes werden durch den pulsierenden Lichtbogen erregt. Alternativ kann auch eine zusätzliche, in seiner Erregerfrequenz durchstimmbare Erregereinheit zur Schwingungserregung verwendet werden. Im Ausführungsbeispiel wird der pulsierende Lichtbogen als Schwingungserreger verwendet

Aus dem erfassten Elektrodenstrom wird dann in einem Verfahrensschritt 41 ein frequenzabhängiges Elektrodenstromauswertesignal ermittelt, bspw. in Form des fouriertransformierten quadrierten Elektrodenstroms oder des fouriertransformierten Betrags des Elektrodenstroms. Zeitlich parallel dazu werden in einem Verfahrensschritt 41" die erfassten KörperschallSchwingungssignale vom Zeitraum in den Frequenzraum transformiert und damit das frequenzabhängige Schwingungsauswertesignal gebildet.

Aus den frequenzabhängigen Stromauswertesignalen und den frequenzabhängigen Schwingungsauswertesignalen wird nun für gemeinsame Frequenzen jeweils eine Phasenverschiebung ermittelt. Dies geschieht in einem Verfahrensschritt 43. An diese ermittelte frequenzabhängige Phasenverschiebung wird in einem Verfahrensschritt 44 eine Fit-Funktion herangefittet, deren Fitparameter die Masse des an der Wand des Ofengefäßes festgesetzten Feststoffteils aufweist und ferner die Dämpfung des Schwingungssystems. Es erfolgt eine Anpassung der Fit-Funktion bis der Abstand der Fit-Funktion von der ermittelten frequenzabhängigen Phasenverschiebung, d.h. den eigentlichen Messpunkten, minimal ist.

Das dann eingestellte $\omega_0^2 = K/m$, d.h. die Eigenschwingungskreisfrequenz des Schwingungssystems in der Schwingungsdifferentialgleichung, kann dann als Maß für die Masse des an der Wand festgesetzten Feststoffteils verwendet werden, da K als konstant angesehen werden kann. Auch kann daraus ggf. eine weitere Größe ermittelt werden, die ebenfalls als Massemaß herangezogen werden kann.

In einem nächsten Verfahrensschritt 34 wird das ermittelte Massemaß graphisch ausgegeben, so dass das Bedienpersonal den zeitlichen Verlauf des Massemaßes mitverfolgen kann. Dies erlaubt insbesondere einen manuellen Steuereingriff in den Betrieb des Lichtbogenofens durch Bedienpersonal. Gleichzeitig wird das ermittelte Massemaß in einem Verfahrensschritt 35 einer Regeleinrichtung zugeführt, welche auf Grundlage des zugeführten Massemaßes Steuereingriffe in den Betrieb des Lichtbogenofens vornimmt. Dadurch kann ein verbesserter Betrieb des Lichtbogenofens erreicht werden, da insbesondere Schrotteinstürze vorhergesehen werden können und vor deren Eintreten geeignete Steuereingriffe erfolgen können, um durch einen Schrotteinsturz verursachte Verfahrensstörungen möglichst gering zu halten.

In einem Verfahrensschritt 36 kann entschieden werden, ob das Verfahren weiter durchgeführt werden soll, oder es abgebrochen werden kann. Dies kann manuell oder automatisch geschehen. Das Verfahren kann in der Regel dann abgebrochen werden, wenn ein Großteil des Schmelzguts im Lichtbogenofen in die flüssige Phase überführt wurde. Hier kommt es kaum noch zu erheblichen Schrotteinstürzen, die die Elektroden gefährden könnten. In der Regel wird das Ende des Einschmelzens automatisch erkannt. Diese Erkenntnis kann auch als Abbruchkriterium für das vorliegende Verfahren verwendet werden.

**Patentansprüche**

1. Verfahren zum Betreiben eines Lichtbogenofens (2) mit wenigstens einer Elektrode (3a, 3b, 3c), wobei ein dem Lichtbogenofen (1) zugeführter Feststoff mittels eines von der wenigstens einen Elektrode (3a, 3b, 3c) ausgebildeten Lichtbogens (1) geschmolzen wird,
**dadurch gekennzeichnet, dass**

    - für die wenigstens eine Elektrode (3a, 3b, 3c) ein zugeführter Elektrodenstrom (I(t)) erfasst (30) wird,
    - Körperschall-Schwingungen (KS(t)) der Begrenzung (2) erfasst (30') werden,
    - aus dem erfassten Elektrodenstrom (I(t)) und den erfassten Körperschall-Schwingungen (KS(t)) ein frequenzabhängiges Stromauswertesignal und ein frequenzabhängiges Schwingungsauswertesignal ermittelt (41, 41'') werden,
    - jeweils eine Phasenverschiebung zwischen dem Stromauswertesignal und dem Schwingungsauswertesignal für eine Mehrzahl gemeinsamer Frequenzen (f) ermittelt (43) wird,
    - aus der ermittelten Phasenverschiebung ein Maß (MM) für die Masse des an der Begrenzung (2) festgesetzten Feststoffteils ermittelt (44) wird , wobei zur Ermittlung des Maßes (MM) für die Masse des an der Begrenzung (2) festgesetzten Feststoffteils ein für erzwungene Schwingungen anwendbares Modell verwendet wird und anhand des ermittelten Maßes (MM) eine Prozessgröße des Lichtbogenofens (1) gesteuert und/oder geregelt (35) wird.

2. Regel- und/oder Steuereinrichtung (9, 23) für einen Lichtbogenofen (1), mit einem maschinenlesbaren Programmcode (21), welcher Steuerbefehle aufweist, die die Regel- und/oder Steuereinrichtung (9, 23) zur Durchführung eines Verfahrens nach Ansprch 1 veranlassen.

3. Maschinenlesbarer Programmcode (21) für eine Regel- und/oder Steuereinrichtung (9, 23) für einen Lichtbogenofen (1), wobei der Programmcode (21) Steuerbefehle aufweist, die die Regel- und/oder Steuereinrichtung (9, 23) zur Durchführung des Verfahrens nach Anspruch 1 veranlassen.

4. Speichermedium (22) mit einem darauf gespeicherten maschinenlesbaren Programmcode (21) gemäß Anspruch 3.

5. Lichtbogenofen (1) mit wenigstens einer Elektrode (3a, 3b, 3c), mit einer Elektrodenstromerfassungseinrichtung (13a, 13b, 13c) zur Erfassung eines der wenigstens einen Elektrode (3a, 3b, 3c) zugeführten Elektrodenstroms (I(t)), mit Körperschallsensoren (4a, 4b, 4c) zur Erfassung von Körperschall-Schwingungen einer Begrenzung (2) des Lichtbogenofens (1), und mit einer Regel- und/oder Steuereinrichtung (9, 23) nach Anspruch 2, wobei die Elektrodenstromerfassungseinrichtung (13a, 13b, 13c) und die Körperschallsensoren (4a, 4b, 4c) mit der Regel- und/oder Steuereinrichtung (9, 23) wirkverbunden sind.

**Claims**

1. Method for operating an arc furnace (1) comprising at least one electrode (3a, 3b, 3c), the solid material fed to the arc furnace (1) being melted by means of an arc formed by the at least one electrode (3a, 3b, 3c), **characterized in that**

    - a supplied electrode current (I(t)) is detected (30) for the at least one electrode (3a, 3b, 3c),
    - structure-borne sound oscillations (KS(t)) of the enclosure (2) are detected (30'),
    - a frequency-dependent current evaluation signal and a frequency-dependent oscillation evaluation signal are determined (41, 41") from the detected electrode current (I(t)) and the detected structure-borne sound oscillations (KS(t)),
    - a phase shift between the current evaluation signal and the oscillation evaluation signal is respectively determined (43) for a multitude of common frequencies (f), and
    - a measure (MM) of the mass of the part of the solid material that is caked on the enclosure (2) is determined (44) from the phase shift determined, wherein a model that can be applied to enforced oscillations is used for determining the measure (MM) of the mass of the part of the solid material that is caked on the enclosure (2) and a process variable of the arc furnace (1) is controlled and/or regulated (35) on the basis of the measure (MM) determined.

**2.** Regulating and/or control device (9, 23) for an arc furnace (1) with a machine-readable program code (21) which has control commands that make the regulating and/or control device (9, 23) carry out a method according to Claim 1.

**3.** Machine-readable program code (21) for a regulating and/or control device (9, 23) for an arc furnace (1), the program code (21) having control commands that make the regulating and/or control device (9, 23) carry out the method according to Claim 1.

**4.** Storage medium (22) with a machine-readable program code (21) according to Claim 3 stored on it.

**5.** Arc furnace (1) comprising at least one electrode (3a, 3b, 3c), comprising an electrode current detection device (13a, 13b, 13c) for detecting an electrode current (I(t)) supplied to the at least one electrode (3a, 3b, 3c), comprising structure-borne sound sensors (4a, 4b, 4c) for detecting structure-borne sound oscillations of an enclosure (2) of the arc furnace (1), and comprising a regulating and/or control device (9, 23) according to Claim 2, the electrode current detection device (13a, 13b, 13c) and the structure-borne sound sensors (4a, 4b, 4c) being operatively connected to the regulating and/or control device (9, 23).

**Revendications**

**1.** Procédé destiné au fonctionnement d'un four à arc électrique (2) avec au mois une électrode (3a, 3b, 3c), dans lequel une matière solide amenée au four à arc électrique (1) est fondue au moyen d'un arc électrique (1) configuré par l'au moins une électrode (3a, 3b, 3c), **caractérisé en ce que**

- pour l'au moins une électrode (3a, 3b, 3c) un courant d'électrode amené (I(t)) est détecté (30),
- des vibrations sonores de structure (KS(t)) de la délimitation (2) sont détectées (30'),
- à partir du courant d'électrode (I(t)) détecté et des vibrations sonores de structure (KS(t)) détectées un signal d'analyse de courant dépendant de la fréquence et un signal d'analyse des vibrations dépendant de la fréquence sont déterminés (41, 41"),
- respectivement un décalage de phases entre le signal d'analyse de courant et le signal d'analyse de vibrations est déterminé (43) pour une pluralité de fréquences communes (f),

- à partir du décalage de phases déterminé une mesure (MM) est déterminée (44) pour la masse de la proportion de matières solides fixée à la délimitation (2), dans lequel en vue de la détermination de la mesure (MM) pour la masse de la proportion de matières solides fixée à la délimitation (2) un modèle applicable pour des vibrations forcées est utilisé et à l'aide de la mesure (MM) déterminée une variable de processus du four à arc électrique (1) est commandée et/ou réglée (35).

**2.** Dispositif de réglage et/ou de commande (9, 23) pour un four à arc électrique (1), avec un code de programme compréhensible par une machine (21), qui présente des instructions de commande, qui chargent le dispositif de réglage et/ou de commande (9, 23) de mettre à exécution un procédé selon la revendication 1.

**3.** Code de programme compréhensible par une machine (21) pour un dispositif de réglage et/ou de commande (9, 23) pour un four à arc électrique (1), dans lequel le code de programme (21) présente des instructions de commande qui chargent le dispositif de réglage et/ou de commande (9, 23) de mettre à exécution le procédé selon la revendication 1.

**4.** Support de stockage (22) avec un code de programme compréhensible par une machine (21) stocké dedans selon la revendication 3.

**5.** Four à arc électrique (1) avec au moins une électrode (3a, 3b, 3c), avec un dispositif de détection de courant d'électrode (13a, 13b, 13c) en vue de la détection d'un courant d'électrode (I(t)) amené à l'au moins une électrode (3a, 3b, 3c), avec des capteurs de bruit de structure (4a, 4b, 4c) en vue de la détection de vibrations sonores dans la structure d'une délimitation (2) du four à arc électrique (1), et avec un dispositif de réglage et/ou de commande (9, 23) selon la revendication 2, dans lequel le dispositif de détection de courant d'électrode (13a, 13b, 13c) et les capteurs de bruit de structure (4a, 4b, 4c) sont en liaison active avec le système de réglage et/ou de commande (9, 23).

FIG 1

FIG 2

FIG 3   KS(t)

FIG 4   α

3a, 4a

f

FIG 5   MM

50

t

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005034378 A1
- DE 102005034409 B3